# EUROPÄISCHE PATENTSCHRIFT

(11) **EP 0 916 836 B1**
(45) Veröffentlichungstag und Bekanntmachung des Hinweises auf die Patenterteilung: **28.07.2004**
(21) Anmeldenummer: 98121359.8
(22) Anmeldetag: 10.11.1998
(51) Int. Cl.: F02M 25/035

(54) **Vorrichtung zur Zuführung von Dampf zur Einlassluft einer Brennkraftmaschine**
Device for admitting vapour to the intake air of a combustion engine
Dispositif d'admission de vapeur à l'air d'admission d'un moteur à combustion

(30) Priorität: 13.11.1997 DE 19750181
(43) Veröffentlichungstag der Anmeldung: 19.05.1999
(73) Patentinhaber: Munters Euroform GmbH, 52072 Aachen (DE)
(72) Erfinder: Rosén, Per, 226 39 Lund (SE); Wettergard, Jan, 196 31 Kungsängen (SE)
(74) Vertreter: Patentanwälte Hauck, Graalfs, Wehnert, Döring, Siemons, Schildberg

(56) Entgegenhaltungen:
- WO-A-94/29579
- WO-A-95/23286
- DE-A- 2 738 807
- DE-A- 3 339 759
- DE-A- 19 538 067
- DE-C- 570 904
- GB-A- 372 045
- US-A- 1 854 607
- US-A- 4 960 080

## Beschreibung

Die vorliegende Erfindung betrifft eine Vorrichtung zur Zuführung von Dampf zur Einlaßluft, die einer Brennkraftmaschine zugeführt wird, mit den Merkmalen des Oberbegriffs von Patentanspruch 1.

Eine derart ausgebildete Vorrichtung ist aus der WO 95/23 286 bekannt. Durch die Zuführung von Dampf zur Einlaßluft wird das Niveau der Stickoxidemissionen bei einer Brennkraftmaschine drastisch reduziert sowie gleichzeitig der Nutzungsgrad des Brennstoffes erhöht. Durch direkte Verdampfung der Flüssigkeit in der erhaltenen Einlaßluft ist es möglich, als speziellen Vorteil eine Selbstregulierung der Menge des Dampfes in der Einlaßluft zu erhalten, so daß daher keine separate Regulierung der Luftmenge in der Einlaßluft erforderlich ist.

Bei der bekannten Vorrichtung ist der Vorerhitzer entweder an das Kühlwasser oder an die Abgase der Brennkraftmaschine angeschlossen, um die im Kühlwasser oder den Abgasen steckende Energie auf die Flüssigkeit zu übertragen.

Was die Ausbildung der Befeuchtungseinrichtung bei der bekannten Vorrichtung anbetrifft, so ist diese als Befeuchtungsturm ausgebildet, den die Einlaßluft und die Flüssigkeit in entgegengesetzten Richtungen, d.h. im Gegenstrom, durchströmen, wobei die Flüssigkeit am oberen Ende und die Einlaßluft am unteren Ende in den Befeuchtungsturm eingeführt werden. Die Flüssigkeit wird über eine Düse im Befeuchtungsturm zu einem Nebel dispergiert, der durch den Befeuchtungsturm nach unten fällt und dabei durch die durch den Befeuchtungsturm nach oben strömende komprimierte und somit erhitzte Einlaßluft strömt. Hierbei wird ein Teil der Feuchtigkeit verdampft und begleitet die Einlaßluft aus dem Befeuchtungsturm heraus in die Verbrennungskammer der Brennkraftmaschine, beispielsweise einen Dieselmotor mit Turbolader.

Die Verdampfung der Flüssigkeit in einem Gasgemisch auf diese Weise bringt den Vorteil mit sich, daß sie bei wesentlich niedrigeren Temperaturen auftritt als in dem Fall, in dem nur Wasser vorhanden ist. Wenn eine starke Verdampfung bei einer relativ niedrigen Temperatur auftritt, wird es möglich, für den Verdampfungsprozeß Energie niedriger Stufe einzusetzen, die beispielsweise aus dem Kühlwasser und/oder den Abgasen der Brennkraftmaschine stammen kann.

Wie erwähnt, ist bei der bekannten Vorrichtung die Befeuchtungseinrichtung als Befeuchtungsturm, d.h. stehender Behälter, ausgebildet. Diese Bauweise der Befeuchtungseinrichtung eignet sich besonders gut für die Führung der Einlaßluft und der Flüssigkeit im Gegenstrom. Eine derartige Bauweise der Befeuchtungseinrichtung kann jedoch manchmal zu Platzproblemen führen, insbesondere bei beengten Verhältnissen, wie sie beispielsweise auf Schiffen anzutreffen sind.

Aus der US 1 854 607 A ist eine Wasserkühleinrichtung für eine Brennkraftmaschine bekannt, bei der das Kühlwasser zum Kühlen in den Einlaßluftstrom der Brennkraftmaschine gesprüht wird. Ein Teil der auf diese Weise befeuchteten Einlaßluft wird dem Vergaser der Brennkraftmaschine zugeführt. Die Befeuchtungseinrichtung ist bei dieser Vorrichtung als Rohr ausgebildet, durch das die Einlaßluft strömt und in dem ein Innenrohr angeordnet ist, das Perforationen aufweist, über die das Kühlwasser in die Einlaßluft gesprüht wird.

Aus der WO 94/29579 A ist ein Kühler zum Kühlen der vom Kompressor kommenden Luft bekannt, bei dem in einer Befeuchtungsvorrichtung Wasser im Gegenstrom zum Kühlen in die vom Kompressor kommende Luft gesprüht wird. Der Sprüheinrichtung nachgeschaltet sind ein Agglomerator und ein Tropfenabscheider. Die Befeuchtungseinrichtung ist hierbei als vertikal stehender Behälter ausgebildet.

Der Erfindung liegt die Aufgabe zugrunde, eine Vorrichtung der eingangs angegebenen Art zu schaffen, die in bezug auf ihre Höhenabmessungen besonders kompakt baut.

Diese Aufgabe wird erfindungsgemäß bei einer Vorrichtung der angegebenen Art durch die kennzeichnenden Merkmale von Patentanspruch 1 gelöst.

Durch die liegende Bauweise der Befeuchtungseinrichtung werden die vorstehend aufgezeigten Raumprobleme beseitigt. Erfindungsgemäß wurde dabei festgestellt, daß sich eine derartige liegende Bauweise für eine Gegenstromführung der Flüssigkeit und Binlaßluft nur bedingt eignet, da sich hierbei ein relativ schlechter Wirkungsgrad in bezug auf die Dampferzeugung ergibt. Dies ist verständlich, da bei einer liegenden Bauweise bei einer Führung im Gegenstrom die Flüssigkeit parallel zur Längsachse des liegenden Behälters geführt wird, jedoch durch Schwerkraft relativ rasch zum Boden des Behälters absinkt, so daß nur eine kurze Kontaktstrecke zwischen Flüssigkeit und Einlaßluft vorhanden ist. Um diesen relativ geringen Wirkungsgrad bei der Dampferzeugung zu vermeiden, schlägt die erfindungsgemäße Lösung ferner vor, daß der liegende Behälter von der Einlaßluft und der Flüssigkeit im Kreuzstrom und/oder Gleichstrom durchströmt wird.

Wenn hier von einem "liegenden Behälter" die Rede ist, so sind damit auch geringfügig geneigte Behälterstellungen gemeint, die bis zu einer Stellung von 45° zur Horizontalen reichen.

Mit "Kreuzstrom" (cross-flow) ist gemeint, daß Flüssigkeit und Einlaßluft unter einem Winkel aufeinandertreffen, der vorzugsweise 90° beträgt, jedoch auch hiervon abweichen kann und beispielsweise in einem Bereich zwischen 45° und 135° in bezug auf die Strömungsrichtung der Einlaßluft liegen kann, wenn von einer horizontalen Durchströmung des Behälters ausgegangen wird. Natürlich kann auch die Strömungsrichtung der Einlaßluft von der Horizontalen geringfügig abweichen.

Mit "Gleichstrom" ist gemeint, daß Einlaßluft und Flüssigkeit im wesentlichen parallel zueinander den Behälter durchströmen, wobei auch hier Abweichungen von der Parallelität möglich sind, beispielsweise bis zu einem Winkel von 45° zur Strömungsrichtung der Einlaßluft.

Bei einem idealen Kreuzstrom, d.h. bei oben in den Behälter eingeführter Flüssigkeit und den Behälter horizontal durchströmender Einlaßluft, entspricht die Kontaktstrecke zwischen beiden Medien maximal der Behälterhöhe. Durch die seitlich auf die eingeführte Flüssigkeit auftreffende Einlaßluft wird jedoch die Flüssigkeit in Längsrichtung des Behälters mitgerissen, so daß die tatsächliche Kontaktstrecke länger ist. Hierdurch wird ein relativ guter Wirkungsgrad erzielt.

Beim Gleichstrom, bei dem Flüssigkeit und Einlaßluft parallel zueinander in gleicher Richtung durch den liegenden Behälter geführt werden, entstehen die bei einer Gegenstromführung auftretenden Probleme nicht, da die eingeführte Flüssigkeit vom Einlaßluftstrom mitgerissen und über die Länge des Behälters mitgeführt wird, so daß sich auch hier eine relativ lange Kontaktstrecke ergibt, die zu einem guten Wirkungsgrad führt.

In beiden Fällen wird jedenfalls eine in bezug auf die Höhe der Vorrichtung platzsparende Bauweise erreicht, ohne daß gegenüber dem Stand der Technik eine Verschlechterung des Wirkungsgrades bei der Dampfbildung in Kauf genommen werden muß.

Die Befeuchtungseinrichtung weist mindestens einen Füllkörperblock auf. Hiermit läßt sich die Befeuchtungsleistung weiter steigern. Geeignete Füllkörpermaterialien sind bekannt und müssen an dieser Stelle nicht im einzelnen aufgeführt werden.

Zweckmäßigerweise sind in Luftströmungsrichtung hintereinander mehrere Füllkörperblöcke im Behälter angeordnet. Bei einer Strömungsführung im Kreuzstrom kann jeder Füllkörperblock von oben über eine zugehörige Düse mit einem entsprechenden Flüssigkeitsnebel beaufschlagt werden. Diese hintereinander angeordneten Füllkörperblöcke werden von der Einlaßluft in Horizontalrichtung durchströmt, wobei in jedem Füllkörperblockbereich eine entsprechende Flüssigkeitsverdampfung stattfindet. Bei dieser Ausführungsform ergeben sich zusätzlich Steuerungsmöglichkeiten, da, falls gewünscht, bestimmte Füllkörperblöcke mit geringerer Leistung gefahren bzw. ganz stillgelegt werden können.

Der Behälter ist des weiteren mit einem Tropfenabscheider im abstromseitigen Bereich des Behälters und nach dem Füllkörperblock ausgestattet.

In Weiterbildung der Erfindung weist die Befeuchtungseinrichtung mindestens eine an den ersten Anschluß angeschlossene Düse zum Verteilen der Flüssigkeit im Behälter auf. Diese Düse ist, je nach Strömungsführung (Kreuzstrom oder Gegenstrom), im oberen Bereich oder im vorderen Bereich (Eintrittsbereich) des liegenden Behälters angeordnet. Die Flüssigkeit wird mit Hilfe der Düse zu einem Nebel zerstäubt, der nach unten fällt, hierbei mit der Einlaßluft in Kontakt tritt und am Boden der Befeuchtungseinrichtung gesammelt wird. Von hier aus kann er über eine Leitung zu einem Flüssigkeitstank zurückgeführt werden, aus dem die Flüssigkeit auch entnommen wird.

Da der Behälter bei liegender Bauweise zweckmäßigerweise eine relativ große Länge besitzt, hat es sich als besonders günstig erwiesen, bei Führung der Flüssigkeit im Kreuzstrom, mehrere Düsen im oberen Bereich des Behälters in Strömungsrichtung der Einlaßluft hintereinander anzuordnen, so daß der Einlaßluft auf ihrem Wege durch den Behälter in entsprechenden Behälterabschnitten immer neue Flüssigkeit zugeführt wird. Auf diese Weise kann ein besonders großer Anteil der Flüssigkeit verdampft werden.

Bei der verwendeten Flüssigkeit handelt es sich vorzugsweise um Wasser, so daß der Einlaßluft der Brennkraftmaschine Wasserdampf zugeführt wird. Natürlich kann anstelle von Wasser auch jede gewünschte und geeignete andere Flüssigkeit verdampft werden. Auch die Düse, die die Flüssigkeit dispergiert, kann beispielsweise durch eine Anordnung ersetzt werden, über die oder durch die, je nach ihrer Ausführungsform, die Flüssigkeit zum Boden der Befeuchtungseinrichtung strömt.

Im übrigen wird in bezug auf weitere Einzelheiten der Vorrichtung auf die vorstehend erwähnte WO 95/23 286 Bezug genommen, deren Offenbarung durch Bezugnahme in die vorliegende Anmeldung eingearbeitet wird.

Die Erfindung wird nachfolgend anhand von zwei Ausführungsbeispielen in Verbindung mit der Zeichnung im einzelnen erläutert. Es zeigen:
- Figur 1: eine schematische Darstellung einer Brennkraftmaschine mit einer hieran angeschlossenen Vorrichtung zur Zuführung von Dampf zur Einlaßluft gemäß einer ersten Ausführungsform der Erfindung; und
- Figur 2: die Befeuchtungseinrichtung einer Vorrichtung zur Zuführung von Dampf zur Einlaßluft der Brennkraftmaschine gemäß einer zweiten Ausführungsform der vorliegenden Erfindung.

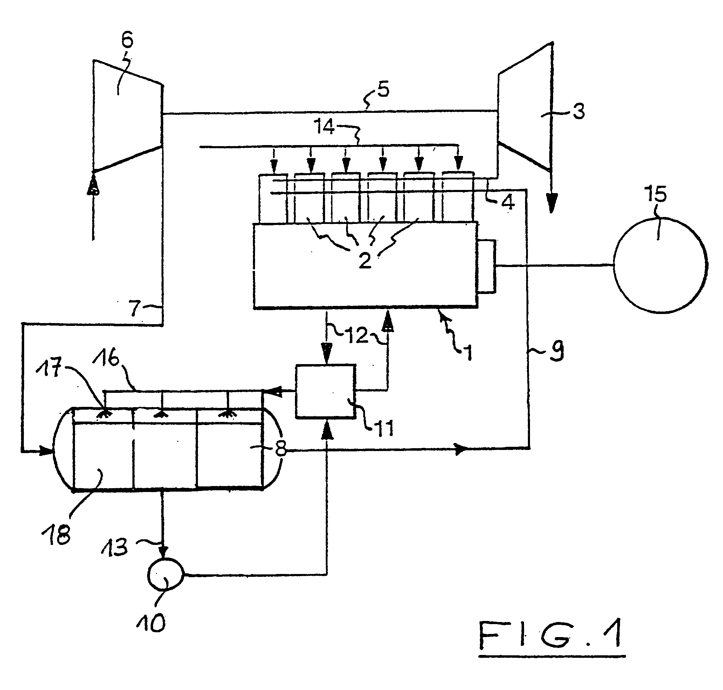

Figur 1 zeigt eine Brennkraftmaschine 1 mit sechs Zylindern 2. Bei der Brennkraftmaschine handelt es sich um einen Dieselmotor mit Turbolader. Der Turbolader umfaßt eine Turbine 3, die an die Abgasseite des Motors 1 über eine Abgasleitung 4 angeschlossen ist. Die Turbine steht über eine Welle 5 mit einem Kompressor 6 in Verbindung und treibt diesen an, um die dem Motor 1 auf der Einlaßseite desselben über eine erste Luftleitung 7 zugeführte Luft zu komprimieren. Zwischen dem Kompressor 6 und dem Motor 1 ist eine Befeuchtungseinrichtung 8 angeordnet, die dazu dient, Wasserdampf der Einlaßluft zuzuführen, bevor diese über eine zweite Luftleitung 9 dem Motor zugeführt wird. Der Wasserdampf wird aus Wasser von einem Tank 10, das über einen Wärmetauscher 11 der Befeuchtungseinrichtung 8 zugeführt wird, erzeugt. Im Wärmetauscher 11 wird das Wasser durch das Kühlwasser des Motors, das über eine Leitung 12 durch den Wärmetauscher 11 zirkuliert, erhitzt.

Es wird nunmehr die Ausbildung der Befeuchtungseinrichtung 8 erläutert. Diese ist als liegender Behälter ausgebildet. Er ist in Richtung seiner Längsachse in drei Abteile aufgeteilt, die jeweils einen Füllkörperblock 18 enthalten. In Strömungsrichtung der Einlaßluft, d.h. in Figur 1 von links nach rechts, sind daher drei Füllkörperblöcke 18 hintereinander angeordnet.

Im in Figur 1 linken Endbereich des Behälters befindet sich ein Anschluß für die vom Kompressor 6 kommende Einlaßluftleitung 7. Über diesen Anschluß wird komprimierte und erhitzte Einlaßluft in den Behälter eingeführt, so daß sie diesen etwa horizontal und parallel zu seiner Längsachse durchströmt.

Im oberen Bereich des Behälters befinden sich drei Anschlüsse für die vom Wärmetauscher 11 kommende Wasserleitung 16. Diese Anschlüsse führen zu drei Düsen 17, wobei sich jeweils eine Düse 17 über einem Füllkörperblock 18 befindet. Das zugeführte Wasser wird über die Düsen 17 zu einem Nebel verteilt, der über den entsprechenden Füllkörperblock 18 strömt und dabei mit der den Füllkörperblock horzizontal durchströmenden Einlaßluft in Kontakt tritt. Hierdurch wird ein Teil des Wassernebels verdampft und mit der Einlaßluft mitgeführt, die über einen am in Figur 1 rechten Endbereich des Behälters angeordneten Auslaß zur Leitung 9 gelangt, mit der die mit Dampf versehene Einlaßluft der Brennkraftmaschine zugeführt wird.

Der nicht verdampfte Wasseranteil sammelt sich am Boden des Behälters und wird dort über eine Leitung 13 zu einem Tank 10 abgeführt. Aus diesem Tank wird das Wasser zum Wärmetauscher 11 geführt.

In der Befeuchtungseinrichtung 18 treffen somit erhitztes Wasser und erhitzte und komprimierte Einlaßluft im Kreuzstrom aufeinander.

Die Vorrichtung funktioniert in der folgenden Weise:

Die Einlaßluft wird im Kompressor 6, der über die Welle 5 von der Turbine 3 angetrieben wird, die wiederum von den Abgasen des Motors 1 angetrieben wird, komprimiert. Die komprimierte und somit erhitzte Einlaßluft wird in Figur 1 von links in die Befeuchtungseinrichtung 8 eingeführt und durchströmt diese in Horizontalrichtung. Dabei durchdringt sie die vorgesehenen Füllkörperblöcke 18 und wird über das am Boden der Befeuchtungseinrichtung 8 angesammelte Wasser geführt. Wasser wird aus dem Tank 10 genommen und über den Wärmetauscher 11 in den oberen Teil der Befeuchtungseinrichtung 8 geführt, wo es über die drei Düsen 17 auf die Füllkörperblöcke 18 versprüht wird. Während das Wasser durch die Füllkörperblöcke 18 nach unten fällt, strömt es durch die die Füllkörperblöcke horizontal durchströmende Einlaßluft. Ein Teil des Wassers wird verdampft und begleitet die Einlaßluft aus der Befeuchtungseinrichtung 8 heraus in die Verbrennungskammer des Motors 1. Im Vergleich zu dem Wasserstrom, der verdampft wird, wird somit ein signifikant größerer Wasserstrom der Befeuchtungseinrichtung zugeführt. Folglich wird die Verdampfungsenergie vom tatsächlichen Wasser entnommen. Wenn die Verdampfung des Wassers in einem Gasgemisch auf diese Weise durchgeführt wird, tritt die Verdampfung bei wesentlich niedrigeren Temperaturen auf als in dem Fall, in dem nur Wasser vorhanden ist. Dies impliziert, daß die Verdampfung nahe bei dem Punkt, bei dem die Luft der Befeuchtungseinrichtung 8 zugeführt wird, bei einer sehr niedrigen Temperatur auftritt und durch die Befeuchtungseinrichtung 8 in Strömungsrichtung der Einlaßluft mit ansteigenden Feuchtigkeitsanteil und somit ansteigendem Partialdruck ansteigt. Wenn eine starke Verdampfung bei einer relativ niedrigen Temperatur auftritt, wird es möglich, für den Verdampfungsprozeß Energie niedriger Stufe einzusetzen. Derartige Energie niedriger Stufe wird in großen Mengen als Überschußwärme vom Motor 1 im Kühlwasser oder in den Abgasen gewonnen. Somit können das Kühlwasser, die Abgase oder beide zum Vorerhitzen des Wassers im Wärmetauscher 11 eingesetzt werden, bevor dieses der Befeuchtungseinrichtung 8 zugeführt wird.

Es sei noch erwähnt, daß Kraftstoff dem Motor 1 über eine Kraftstoffleitung 14 zugeführt wird. Ferner ist der Motor an einen Generator 15 angeschlossen.

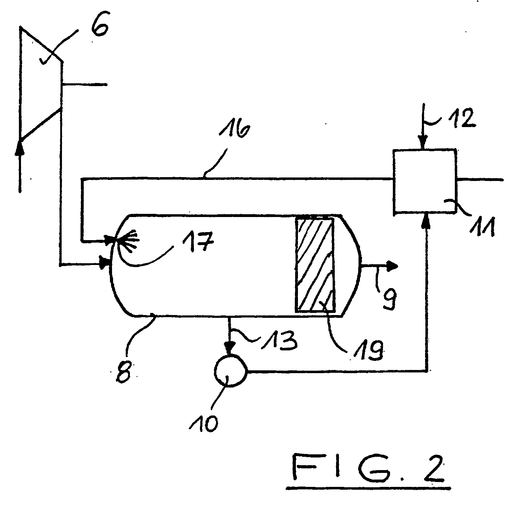

Figur 2 zeigt eine weitere Ausführungsform der erfindungsgemäßen Vorrichtung, die sich von der Vorrichtung der Figur 1 nur durch eine anders augebildete Befeuchtungseinrichtung 8 unterscheidet. In Figur 2 ist daher nur ein Teil der Gesamtvorrichtung gezeigt, der die Befeuchtungseinrichtung 8 betrifft.

Auch bei der Ausführungsform der Figur 2 ist die Befeuchtungseinrichtung 8 als liegender Behälter ausgebildet. Bei dieser Ausführungsform wird der Behälter der Befeuchtungseinrichtung 8 von der komprimierten und erhitzten Einlaßluft und von Wasser im Gleichstrom durchströmt. Wie Figur 2 zeigt, werden beide Medien am in Figur 2 linken Endbereich des Behälters in diesen eingeführt. Dabei wird das über den Wärmetauscher 11 erhitzte Wasser über die Leitung 16 zugeführt und gelangt über einen Anschluß zu einer im Bereich der Behälterendwand angeordneten Düse 17, in der das Wasser als Sprühnebel verteilt wird. Dieser Sprühnebel sinkt nach unten, wird dabei jedoch von der einströmenden Einlaßluft mitgerissen. Durch Kontaktierung beider Medien wird ein Teil des Wassers verdampft und strömt mit der Einlaßluft durch einen stromab im Behälter angeordneten Tropfenabscheider 19. Durch diesen Tropfenabscheider werden die im Luftstrom mitgeführten und nicht verdampften Tropfen abgeschieden, im unteren Teil des Tropfenabscheiders gesammelt und gelangen zusammen mit dem im übrigen Teil des Behälters nicht verdampften Wasser über eine Ablaufleitung 13 in einen Wassertank 10. Aus diesem Wassertank 10 wird das über den Wärmetauscher 11 zugeführte Wasser entnommen. Die den Wasserdampf mitführende Einlaßluft wird über die Leitung 9 aus dem Behälter abgeführt und der Brennkraftmaschine zugeführt.

## Patentansprüche

1. Vorrichtung zur Zuführung von Dampf zur Einlaßluft, die einer Brennkraftmaschine (1) zugeführt wird, mit einer Befeuchtungseinrichtung (8), die einen ersten Anschluß zur Zuführung von Flüssigkeit zur Befeuchtungseinrichtung (8) und einen zweiten Anschluß zur Zuführung der Einlaßluft zur Befecuhtungseinrichtung (8) besitzt, wobei die Befeuchtungseinrichtung (8) die Dampfzufuhr zur Einlaßluft durch Kontakt der Einlaßluft und der Flüssigkeit miteinander bewirkt, während diese durch die Befeuchtungseinrichtung (8) strömen, einem durch einen vom Kühlwasser oder den Abgasen der Brennkraftmaschine (1) durchströmten Wärmetauscher (11) gebildeten Vorerhitzer für die Flüssigkeit, der an den ersten Anschluß der Befeuchtungseinrichtung (8) angeschlossen ist und die Flüssigkeit vor Zuführung zur Befeuchtungseinrichtung (8) vorerhitzt, und einem an den zweiten Anschluß der Befeuchtungseinrichtung (8) angeschlossenen Kompressor (6) zum Komprimieren der Einlaßluft, wobei in der Befeuchtungseinrichtung (8) mindestens ein von der Einlaßluft und der Flüssigkeit passierter Körper angeordnet ist, **dadurch gekennzeichnet, daß** die Befeuchtungseinrichtung (8) als liegend angeordneter länglicher Behälter ausgebildet ist und von der den Behälter horizontal passierenden Einlaßluft und der Flüssigkeit im Kreuzstrom und/oder Gleichstrom durchströmt wird, daß der Körper ein von der Flüssigkeit und der Einlaßluft durchströmter Füllkörperblock (18) ist und daß im Behälter dem Füllkörperblock (18) ein Tropfenabscheider (19) nachgeschaltet ist.

2. Vorrichtung nach Anspruch 1, **dadurch gekennzeichnet, daß** die Befeuchtungseinrichtung (8) mindestens eine an den ersten Anschluß angeschlossene Düse (17) zum Verteilen der Flüssigkeit im Behälter aufweist.

3. Vorrichtung nach Anspruch 1 oder 2, **dadurch gekennzeichnet, daß** in Luftströmungsrichtung hintereinander mehrere Füllkörperblöcke (18) angeordnet sind.

4. Vorrichtung nach Anspruch 2 oder 3, **dadurch gekennzeichnet, daß** abwechselnd eine Düseneinsprühung und ein Füllkörperblock hintereinander angeordnet sind.

5. Vorrichtung nach einem der vorangehenden Ansprüche, **dadurch gekennzeichnet, daß** die Flüssigkeit zur Befeuchtung als Ganzes von oben auf einen horizontal durchströmten Füllkörperblock aufgegeben wird.

6. Vorrichtung nach einem der vorangehenden Ansprüche, **dadurch gekennzeichnet, daß** mehrere Füllkörperblöcke hintereinander getrennt angebracht sind und jeweils separat von oben mit Flüssigkeit beaufschlagt werden.

## Claims

1. A device for admitting vapour to the intake air which is supplied to a combustion engine (1), said device comprising a moistening means (8) having a first connection for feeding liquid into said moistening means (8) and a second connection for feeding the intake air into said moistening means (8), wherein said moistening means (8) causes the vapour supply to the intake air by contact of the intake air and the liquid with one another while the same flow through said moistening means (8), a preheater for the liquid formed by a heat exchanger (11) flown through by the cooling water or the exhaust gases of the combustion engine (1) and connected to the first connection of said moistening means (8) and preheating the liquid prior to the supply to said moistening means (8), and a compressor (6) connected to the second connection of said moistening means (8) for compressing the intake air, wherein in said moistening means (8) at least one body is disposed which is passed by the inlet air and the liquid, **characterized in that** said moistening means (8) is formed as lying elongated container and is flown through by the inlet air and the liquid horizontally passing said container in cross flow and/or parallel flow, the body is a packing block (18) passed by the liquid and the intake air, and a droplet separator (19) is arranged in said container downstream of the packing block (18).

2. The device according to claim 1, **characterized in that** said moistening means (8) has at least one nozzle (17) connected to said first connection for distributing the liquid in said container.

3. The device according to claim 1 or 2, **characterized in that** a plurality of packing blocks (18) are arranged one behind the other in flow direction of the air.

4. The device according to claim 2 or 3, **characterized in that** alternately a nozzle spraying means and a packing block are arranged one behind the other.

5. The device according to one of the preceding claims, **characterized in that** the liquid is completely applied from above to a horizontally passed packing block for moistening.

6. The device according to one of the preceding claims, **characterized in that** a plurality of packing blocks are separately arranged one behind the other and are separately applied with liquid from above, respectively.

## Revendications

1. Dispositif destiné à alimenter en vapeur l'air d'admission qui est admis dans un moteur à combustion (1), comprenant un dispositif d'humidification (8) qui a un premier raccordement pour alimenter en liquide le dispositif d'humidification (8) et un deuxième raccordement pour alimenter en air le dispositif d'humidification (8), le dispositif d'humidification effectuant l'alimentation en vapeur de l'air d'admission par la mise en contact de l'air d'admission et du liquide pendant que ceux-ci s'écoulent dans le dispositif d'humidification (8), un préchauffage pour le liquide, formé par un échangeur de chaleur (11) parcouru par l'eau de refroidissement ou les gaz d'échappement du moteur à combustion (1), qui est raccordé au premier raccordement du dispositif d'humidification (8) et préchauffe le liquide avant son amenée dans le dispositif d'humidification (8), et un compresseur (6) raccordé au deuxième raccordement du dispositif d'humidification (8) pour comprimer l'air d'admission, au moins un corps traversé par l'air d'admission et le liquide étant disposé dans le dispositif d'humidification (8), **caractérisé en ce que** le dispositif d'humidification (8) est conformé comme un récipient oblong disposé couché et est traversé par l'air d'admission traversant horizontalement le récipient et le liquide s'écoulant en sens croisé et / ou dans le même sens, **en ce que** le corps est un bloc de corps de remplissage (18) traversé par le liquide et l'air d'admission et **en ce que** un pare-gouttes (19) est placé après le bloc de corps de remplissage (18) dans le récipient.

2. Dispositif selon la revendication 1, **caractérisé en ce que** le dispositif d'humidification (8) présente au moins un gicleur (17) raccordé au premier raccordement pour répartir le liquide dans le récipient.

3. Dispositif selon la revendication 1 ou 2, **caractérisé en ce que** plusieurs blocs de corps de remplissage (18) sont disposés les uns derrière les autres dans le sens d'écoulement de l'air.

4. Dispositif selon la revendication 2 ou 3, **caractérisé en ce que** un gicleur diffuseur et un bloc de corps de remplissage sont disposés en alternance l'un derrière l'autre.

5. Dispositif selon une des revendications précédentes, **caractérisé en ce que** le liquide pour l'humidification est versé en entier par le dessus sur un bloc de corps de remplissage traversé horizontalement.

6. Dispositif selon une des revendications précédentes, **caractérisé en ce que** plusieurs blocs de corps de remplissage sont installés séparément les uns derrière les autres et reçoivent chaque fois séparément du liquide par le haut.
